(19) Europäisches Patentamt
European Patent Office
Office européen des brevets

(11) **EP 4 510 479 A1**

(12) **EUROPEAN PATENT APPLICATION**

(43) Date of publication:
**19.02.2025 Bulletin 2025/08**

(21) Application number: **24189795.8**

(22) Date of filing: **19.07.2024**

(51) International Patent Classification (IPC):
**H04L 1/00** (2006.01)      **H04B 7/06** (2006.01)
**G06N 3/08** (2023.01)      **H04L 25/02** (2006.01)

(52) Cooperative Patent Classification (CPC):
**H04L 1/0026; H04B 7/0626; H04B 7/0658;**
**H04L 1/0029;** G06N 3/08; H04L 25/0254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 FI 20235863**

(71) Applicant: **Nokia Solutions and Networks Oy
02610 Espoo (FI)**

(72) Inventors:
• **BARBU, Oana-Elena
  Aalborg (DK)**
• **REZAIE, Sajad
  Aalborg (DK)**
• **LADDU, Keeth Saliya Jayasinghe
  Espoo (FI)**

(74) Representative: **Nokia EPO representatives
Nokia Technologies Oy
Karakaari 7
02610 Espoo (FI)**

(54) **CORRECTION OF DECODED CHANNEL STATE INFORMATION**

(57)    A method, apparatus and computer program is described comprising: receiving data transmitted over a wireless channel (the data encoding a first estimate of a channel state information of the wireless channel); decoding said data to generate a second estimate of the channel state information of the wireless channel; and generating a channel state information output by modifying the second estimate of the channel state information based, at least in part, on a first error indication.

Fig. 4

## Description

## Field

The present specification relates to channel state information in wireless communication systems.

## Background

The present specification relates to channel state information in wireless communication systems. For example, an estimate of channel state information may be transmitted from a device (e.g. a user device) over a channel of the wireless communication system.

## Summary

In a first aspect, this specification describes an apparatus comprising: means for receiving data transmitted by a device of a wireless communication system over a channel of said wireless communication system (the device may be a user device or user equipment of the mobile communication system), wherein said data encodes a first estimate of a channel state information of the wireless channel as determined at said device; means for decoding said data to generate a second estimate of the channel state information of the wireless channel; and means for generating a channel state information output by modifying the second estimate of the channel state information based, at least in part, on a first error indication (e.g. a binary scalar) indicative of estimated errors in the first channel state information estimate as generated at the device.

In a second aspect, this specification describes an apparatus comprising: means for receiving data transmitted by a device of a wireless communication system over a channel of said wireless communication system (the device may be a user device or user equipment of the mobile communication system), wherein said data encodes a first estimate of a channel state information of the wireless channel as determined at said device; means for decoding said data to generate a second estimate of the channel state information of the wireless channel; and means for generating a channel state information output by modifying the second estimate of the channel state information based, at least in part, on partially correcting errors introduced in the data transmission over the wireless connection between the device and the network node. Alternatively, or in addition, the second estimate of the channel state information may be modified based, at least in part, on a first error indication (e.g. a binary scalar) indicative of estimated errors in the first channel state information estimate as generated at the device.

Some example embodiments of the first and second aspects further comprise means for generating the first error indication. The means for generating said first error indication may comprise a first machine learning module (e.g. a further neural network). Some example embodiments further comprise means for training said first machine learning module by minimising a loss function including labelled code data.

In some example embodiments of the first and second aspects, the means for generating said channel state information output comprises a second machine learning module (e.g. a second neural network). Some example embodiments of the first and second aspects further comprise means for training said second machine learning module based on comparisons of generated channel state information with labelled channel state information data.

In some example embodiments of the first and second aspects, the means for generating said channel state information output is configured to at least partially correct errors introduced in the data transmitted over the wireless connection between the device and the network node. The apparatus may further comprise means for detecting the errors introduced in the data transmitted over the wireless connection between the device and the network node. The detection means may be implemented using a machine learning module, a neural network or some other module. For example, the second machine learning module discussed above may be used.

In the first and second aspects, the said means may comprise at least one processor; and at least one memory storing instructions that, when executed by the at least one processor, cause the performance of the apparatus.

In a third aspect, this specification describes a method comprising: receiving data transmitted by a device of a wireless communication system over a channel of said wireless communication system (the device may be a user device or user equipment of the mobile communication system), wherein said data encodes a first estimate of a channel state information of the wireless channel as determined at said device; decoding said data to generate a second estimate of the channel state information of the wireless channel; and generating a channel state information output by modifying the second estimate of the channel state information based, at least in part, on a first error indication (e.g. a binary scalar) indicative of estimated errors in the first channel state information estimate as generated at the device. The method may further comprise generating the first error indication. Furthermore, generating said channel state information output may include at least partially correcting errors introduced in the data over the wireless connection between the device and the network node.

In a fourth aspect, this specification describes a method comprising: receiving data transmitted by a device of a wireless communication system over a channel of said wireless communication system (the device may be a user device or user equipment of the mobile communication system), wherein said data encodes a first estimate of a channel state information of the wireless channel as determined at said device; decoding said data to generate a second estimate of the channel state information of the wireless channel; and generating a channel state information output by modifying the second estimate of the channel state information based, at least in part, on partially correcting errors introduced in the data transmission over the wireless connection between the device and the network node. Alternatively, or in addition, the second estimate of the channel state information may be modified based, at least in part, on a first error indication (e.g. a binary scalar) indicative of estimated errors in the first channel state information estimate as generated at the device. The method may further comprise generating the first error indication. Furthermore, generating said channel state information output may include at least partially correcting errors introduced in the data over the wireless connection between the device and the network node.

The first error indication may be generated by using a first machine learning module (e.g. a further neural network). Some example embodiments of the third and fourth aspects further comprise training said first machine learning module by minimising a loss function including labelled code data.

The channel state information output may be generated using a second machine learning module (e.g. a second neural network). Some example embodiments of the third and fourth aspects further comprise training said second machine learning module based on comparisons of generated channel state information with labelled channel state information data.

Some example embodiments of the third and fourth aspects further comprise detecting the errors introduced in the data transmitted over the wireless connection between the device and the network node. The detection means may be implemented using a machine learning module, a neural network or some other module. For example, the second machine learning module discussed above may be used.

In a fifth aspect, this specification describes computer-readable instructions which, when executed by a computing apparatus, cause the computing apparatus to perform (at least) any method as described herein (including the methods of the third or fourth aspects described above).

In a sixth aspect, this specification describes a computer-readable medium (such as a non-transitory computer-readable medium) comprising program instructions stored thereon for performing (at least) any method as described herein (including the methods of the third or fourth aspects described above).

In a seventh aspect, this specification describes an apparatus comprising: at least one processor; and at least one memory including computer program code which, when executed by the at least one processor, causes the apparatus to perform (at least) any method as described herein (including the method of the third or fourth aspects described above).

In an eighth aspect, this specification describes an apparatus comprising: at least one processor; and at least one memory storing instructions that, when executed by the at least one processor, causes the apparatus to perform (at least) any method as described herein (including the method of the third or fourth aspects described above).

In a ninth aspect, this specification describes a computer program comprising instructions which, when executed by an apparatus, cause the apparatus to: receive data transmitted by a device of a wireless communication system over a channel of said wireless communication system (the device may be a user device or user equipment of the mobile communication system), wherein said data encodes a first estimate of a channel state information of the wireless channel as determined at said device; decode said data to generate a second estimate of the channel state information of the wireless channel; and generate a channel state information output by modifying the second estimate of the channel state information based, at least in part, on a first error indication (e.g. a binary scalar) indicative of estimated errors in the first channel state information estimate as generated at the device. The apparatus may be further caused to generated the first error indication. Furthermore, generating said channel state information output may include at least partially correcting errors introduced in the data over the wireless connection between the device and the network node.

In a tenth aspect, this specification describes a computer program comprising instructions which, when executed by an apparatus, cause the apparatus to: receive data transmitted by a device of a wireless communication system over a channel of said wireless communication system (the device may be a user device or user equipment of the mobile communication system), wherein said data encodes a first estimate of a channel state information of the wireless channel as determined at said device; decode said data to generate a second estimate of the channel state information of the wireless channel; and generate a channel state information output by modifying the second estimate of the channel state information based, at least in part, on partially correcting errors introduced in the data transmission over the wireless connection between the device and the network node. Alternatively, or in addition, the second estimate of the channel state information may be modified based, at least in part, on a first error indication (e.g. a binary scalar) indicative of estimated errors in the first channel state information estimate as generated at the device. The apparatus may be further caused to generate the first error indication. Furthermore, generating said channel state information output may include at least partially correcting errors introduced in the data over the wireless connection between the device and the network node.

In an eleventh aspect, this specification describes a receiver module (or some other means) for receiving data transmitted by a device of a wireless communication system over a channel of said wireless communication system (the device may be a user device or user equipment of the mobile communication system), wherein said data encodes a first estimate of a channel state information of the wireless channel as determined at said device; a decoder, such as an AIML decoder, (or some other means) for decoding said data to generate a second estimate of the channel state information of the wireless channel; and a processor, such as one or more machine learning modules, (or some other means) for generating a channel state information output by modifying the second estimate of the channel state information based, at least in part, on a first error indication (e.g. a binary scalar) indicative of estimated errors in the first channel state information estimate as generated at the device.

In a twelfth aspect, this specification describes a receiver module (or some other means) for receiving data transmitted by a device of a wireless communication system over a channel of said wireless communication system (the device may be a user device or user equipment of the mobile communication system), wherein said data encodes a first estimate of a channel state information of the wireless channel as determined at said device; a decoder, such as an AIML decoder, (or some other means) for decoding said data to generate a second estimate of the channel state information of the wireless channel; and a processor, such as one or more machine learning modules, (or some other means) for generating a channel state information output by modifying the second estimate of the channel state information based, at least in part, on partially correcting errors introduced in the data transmission over the wireless connection between the device and the network node.

**Brief description of the drawings**

Example embodiments will now be described, by way of non-limiting examples, with reference to the following schematic drawings, in which:

FIGS. 1 to 4 are block diagrams showing systems in accordance with example embodiments;
FIGS. 5 to 8 are flow charts showing algorithms in accordance with example embodiments;
FIG. 9 is a block diagram showing a system in accordance with an example embodiment;
FIG. 10 is a schematic diagram of components of one or more of the example embodiments described previously; and
FIG. 11 shows tangible media for storing computer-readable code which when run by a computer may perform methods according to example embodiments described herein.

**Detailed description**

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

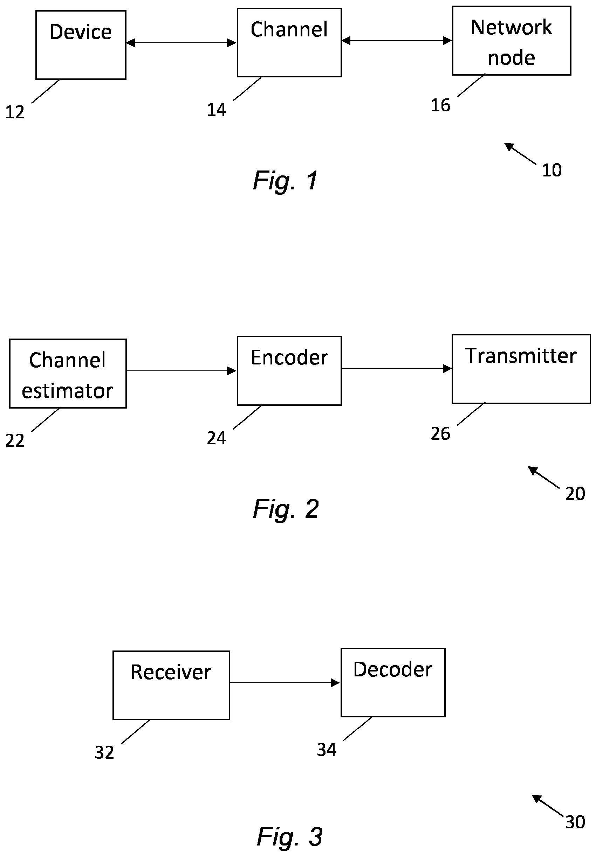

FIG. 1 is a block diagram showing a system, indicated generally by the reference numeral 10, in accordance with an example embodiment. The system comprises a device (such as a user equipment (UE)) 12, a channel 14 and a network node 16. The device 12 and the network node 16 are in two-way communication with each other via the channel 14.

In systems such as the system 10, channel state information (CSI) may be required for many purposes, such as accurate precoding in massive multiple-input multiple-output (MIMO) communications with frequency division duplex (FDD) schemes. Accurate CSI can be used, for example, to enable a base station (BS) to obtain higher signal-to-noise-ratio (SNR) and to improve channel capacity. However, in many implementations of the system 10 (such as FDD networks), only the device 12 can estimate downlink CSI. In such systems, the estimated CSI is typically shared with the network node 16 over the channel 14, which introduces a communication overhead to the system.

To reduce this overhead, the CSI may be compressed and/or quantized prior to transmission. For example, the CSI data may be compressed (e.g. using vector quantization) to generate a codebook that achieves a high compression rate (CR), i.e., the ratio of compressed size to uncompressed size. (The compression rate may be a scalar in the range of (0, 1], where a lower CR means more compression.) Alternatively, or in addition, the CSI data may be quantized such that, for example, the device 12 communicates quantized bits over the channel 14, with the network node 16 including a de-quantizer to generate signals that a decoder can use to reconstruct the original channel state information estimate.

Schemes (such as data compression and/or data quantization) for reducing transmission overheads may limit the accuracy of CSI reconstruction.

FIG. 2 is a block diagram showing a system, indicated generally by the reference numeral 20, in accordance with an example embodiment. The system 20 comprises a channel estimator 22, an encoder 24 and a transmitter 26 that form part of an example implementation of the device 12 described above. The channel estimator 22 can be used to estimate downlink channel state information (CSI). An encoded version of the estimated CSI is transmitted using the transmitter 26 (for example from the device 12 to the network node 16 over the channel 14).

FIG. 3 is a block diagram showing a system, indicated generally by the reference numeral 30, in accordance with an example embodiment. The system 30 comprises a receiver 32 and a decoder 34 that may form part of an example implementation of the network node 16 described above. The receiver 32 may receive the encoded CSI data as transmitted by the system 20. The decoder 34 decodes the encoded and transmitted CSI in order to reconstruct the CSI as estimated by the channel estimator 22.

The encoder 24 and the decoder 34 may together act as an autoencoder (AE), with the encoder 24 being used to generate a compressed representation of the input CSI and the decoder 34 being used to reconstruct the CSI from the compressed information.

The encoder and decoder of an autoencoder-based CSI compression arrangement may be implemented using artificial intelligence or machine learning models (AIML). Such models may be trained in a number of ways, for example:

- Joint training of the two-sided autoencoder model at a single side/entity, e.g., at the UE/device side or at the network side of the system 10. This may be referred to a type 1 training.
- Joint training of the two-sided autoencoder model at the network side and the UE/device side of the system 10, respectively. This may be referred to as type 2 training.
- Separate training at network side and UE/device side, where the UE/device-side CSI generation part and the network-side CSI reconstruction part are trained by the UE/device side and the network side, respectively. This may be referred to as type 3 training.

Joint training may refer to the code generation model (encoder) and the reconstruction model (decoder) being trained in the same loop for forward propagation and backward propagation. Joint training could be implemented at a single node or across multiple nodes (e.g. through gradient exchange between nodes).

Separate training may include sequential training starting with UE side training, or sequential training starting with network side training at the UE.

In the system 20, the output of the channel estimator 22 provides an imperfect channel estimation denoted by eCSI as follows:

$$eCSI = CSI + \epsilon_1,$$

Where $\varepsilon_1$ is an error term introduced by the imperfect downlink channel estimation. Note that $\varepsilon_1$ is typically the main source of error in CSI feedback.

The eCSI is then encoded by the encoder 24 (that may form part of an AIML autoencoder) into a bit vector C.

The code C is prepared for transmission by the transmitter module 26. For example, the code C may undergo an OFDM transmission over an uplink control channel (e.g., the bits may be encoded using Polar codes, modulated onto QAM symbols, and then into an OFDM waveform).

The transmitted waveform (e.g. an OFDM waveform) travels over a wireless propagation channel (e.g. the channel 14) to the receiver 32 of the system 30. During transmission, the waveform is contaminated by noise and interference. At the receiver 32, the signal may undergo an OFDM reception (using receiver 32) and decoding (using decoder 34), so that an estimated code $\hat{C}$ is produced, where the estimation quality depends on the wireless conditions and the robustness of the transmission scheme:

$$\hat{C} = C + \epsilon_2,$$

Here $\varepsilon_2$ is the error at the input of the decoder 34. In some example embodiments, $\varepsilon_2$ may be a rare event, due to very high error detection/correction probability using legacy channel coding with CRC check. However, depending on the received signal's signal-to-noise ratio (SNR) and the considered codelength and code rate for the legacy channel coding, $\varepsilon_2$ may be higher. In case $\varepsilon_2$ is available in $\hat{C}$, if we manage to correct the received code, there is no need to schedule a retransmission, which results in reduced latency and saved resources.

The estimated code is decoded by the decoder 34 and a reconstructed eCSI (denoted by $\widehat{eCSI}$) is output. Thus, $\widehat{eCSI}$ is an imperfect estimate of the true CSI, where the imperfections have broadly two causes:

- DL-based errors $\varepsilon_1$ due to the imperfect downlink channel estimation in the UE, i.e., the first block of which produces eCSI.
- UL-based errors $\varepsilon_2$ due to the imperfect uplink OFDM reception which introduces error on the estimated code $\hat{C}$ in the gNB.

The imperfect reconstruction $\widehat{eCSI}$ may, for example, be used to select a precoder, where the selection itself may become suboptimal, depending on how inaccurate $\widehat{eCSI}$ ultimately is.

To provide an accurate CSI feedback architecture which is relatively agnostic to the severity of channel conditions (in both DL and UL), it is desirable that the network node 16 reconstructs an accurate version of the CSI.

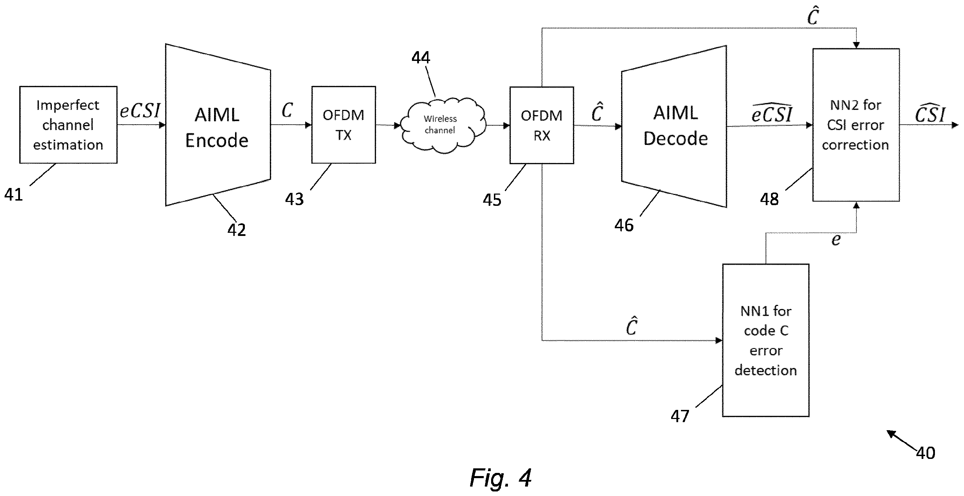

FIG. 4 is a block diagram showing a system, indicated generally by the reference numeral 40, in accordance with an example embodiment.

The system comprises a channel estimator 41, an encoder 42, an OFDM transmitter module 43, a wireless channel 44, an OFDM receiver module 45, a decoder 46, an error detection module 47 and an error correction module 48.

The channel estimator 41, encoder 42 and transmitter module 43 are similar to the channel estimator 22, encoder 24 and transmitter 26 and may form part of the device 12 of the system 10 described above. The receiver module 45, decoder 46, error detection module 47 and error correction module 48 may form part of the network node 16 of the system 10 described above.

The OFDM receiver 45 implements a means for receiving data transmitted by a device (e.g. the device 12) of a wireless communication system over the channel 44 of a wireless communication system. The data encodes a first estimate of a channel state information of the wireless channel as determined at the device (i.e. as determined at the channel estimator 41).

As described above with reference to the system 20, the channel estimator 41 is an imperfect channel estimator that provides an imperfect channel estimation denoted by eCSI as follows:

$$eCSI = CSI + \epsilon_1,$$

Where $\varepsilon_1$ is an error term introduced by the imperfect downlink channel estimation.

The eCSI is then encoded by the encoder 42 into a bit vector C.

The code C is prepared for transmission by the OFDM transmitter module 43. At the OFDM receiver 45, an estimated code $\hat{C}$ is produced, where the estimation quality depends on the wireless conditions and the robustness of the transmission scheme:

$$\hat{C} = C + \epsilon_2,$$

The estimated code $\hat{C}$ is passed through the decoder 46 (which may be a decoder part of an AIML autoencoder with the encoder 42) to produce a reconstructed CSI estimate $\widehat{eCSI}$ which is then sent to an error correction module 48 that aims to remove some or all uplink and downlink error from the reconstructed code.

The reconstructed code $\hat{C}$ is also routed to the error detection module 47 which detects errors in the reconstructed code and outputs a scalar e e [0,1], where e = 1 if $\hat{C} = C$.

The error correction module 48 receives:

- the reconstructed code $\hat{C}$ output by the OFDM receiver 45;

- the reconstructed $\widehat{eCSI}$ output by the decoder 46; and
- the detected error e output by the error detection module 47.

The error correction module 48 seeks to remove the uplink and downlink errors discussed above in the reconstructed CSI estimate ( $\widehat{eCSI}$ ) to produce an estimate $\widehat{CSI}$ that closely approaches the true CSI.

Thus, the decoder 46 generates a second estimate ( $\widehat{eCSI}$ ) of the channel state information of the wireless channel and the error correction module generates a channel state information output ( $\widehat{CSI}$ ) by modifying the second estimate of the channel state information based, at least in part, on the first error indication (e). The first error indication may be indicative of estimated errors in the first channel state information estimate as generated at the device (i.e. downlink error). Alternatively, or in addition, the first error indication may be indicative of uplink errors introduced in the data transmitted over the wireless connection between the device and the network node.

It should be noted that although the decoder 46, the error detection module 47 and the error correction module 48 are shown as three separate modules, two or more of those modules could be merged into a single module (e.g. into a single neural network). For example, the error detection module 47 and the error correction module 48 could be integrated. Nevertheless, there may be advantages to separating the modules, not least as the training of the modules can then be more easily separated.

As discussed in detail below, the error correction module 48 may be a neural network or machine learning module that can trained to distinguish between:

- DL channel estimation errors (at the channel estimation module 41); and
- UL reception errors.

The error detection module 47 (for generating the first error indication) may also be implemented using a neural network or a machine learning module.

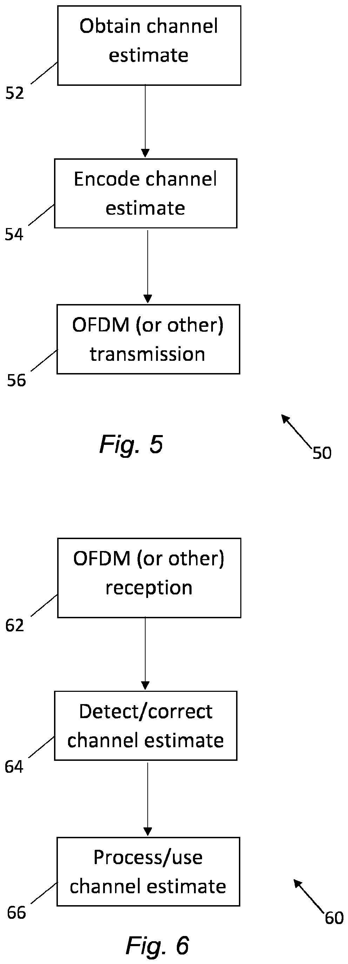

FIG. 5 is a flow chart showing an algorithm, indicated generally by the reference numeral 50, in accordance with an example embodiment. The algorithm 50 may be implemented on the device side of the system 40 (i.e. using the channel estimator 41, the encoder 42 and the OFDM transmitter module 43).

The algorithm 50 starts at operation 52 where a channel estimate is obtained (e.g. an imperfect channel estimate). The channel estimate may be generated using a traditional approach, or using a machine-learning approach.

The channel estimate is encoded at operation 54 (e.g. using an encoder part of an autoencoder). The encoder may be a machine learning module and may be trainable.

At operation 56, the encoded channel estimate is transmitted using OFDM or some other transmission arrangement. For example, the outputs of the operation 54 may be encoded, modulated onto QAM symbols and then transmitted as an OFDM waveform.

FIG. 6 is a flow chart showing an algorithm, indicated generally by the reference numeral 60, in accordance with an example embodiment. The algorithm 60 may be implemented on the network side of the system 40 (e.g. using the OFDM receiver module 45, the decoder 46, the error detection module 47 and the error correction module 48).

The algorithm 60 starts at operation 62, where the signal transmitted in the operation 56 is received (e.g. using OFDM or some other reception technique).

At operation 64, the channel estimation (as originally generated in the operation 52) is detected and corrected (for example using one or more neural networks or machine learning algorithms). As discussed in detail above, the correction may correct for errors introduced by the imperfect channel estimation in the operation 52 and/or errors introduced during the encoding, transmission and decoding of the channel estimation. A trainable machine-learning based detection and/or correction block may be used to detect errors in the received code and/or to produce a modified channel estimate.

Finally, at operation 66, the channel estimate obtained in the operation 64 is used in some way. For example, the channel estimate may be used in the selection of a precoder for massive multiple-input multiple-output (MIMO) communications.

In the system 40, the error detection module 47 is typically a neural network that outputs a binary scalar indicative of error. The error detection module 47 can be trained as a binary classification task.

A binary cross entropy (CE) may be used as a cost function to train a binary classifier implemented the error detection module 47. The label for training can be obtained by sharing code C from the device (e.g. device 12) to the network node (e.g. node 16) using a more reliable link or by considering multiple transmission or share on the cloud. Then, the label can be written as

$$e^{(l)} = \begin{cases} 1, & \widehat{C} = C \\ 0, & \widehat{C} \neq C \end{cases}$$

Cross-entropy (CE) loss function between the ML block output e and the label $e^L$ is

$$L_{CE} = -\left( e^{(l)} \log e + (1 - e^{(l)}) \log(1 - e) \right)$$

For training the error correction module 48, we may consider mean squared error (MSE) or squared generalized cosine similarity (SGCS) between the reconstructed CSI and the optimal/desired CSI. Note that the optimal/desired CSI as the labels can be obtained either by an emulator or by considering a more complex channel estimator compared to what is used in the user device in inference. For example, the user device uses least square (LS) as channel estimator in inference. However, the user device uses both LS and LMMSE channel estimators in the training phase for data collection).

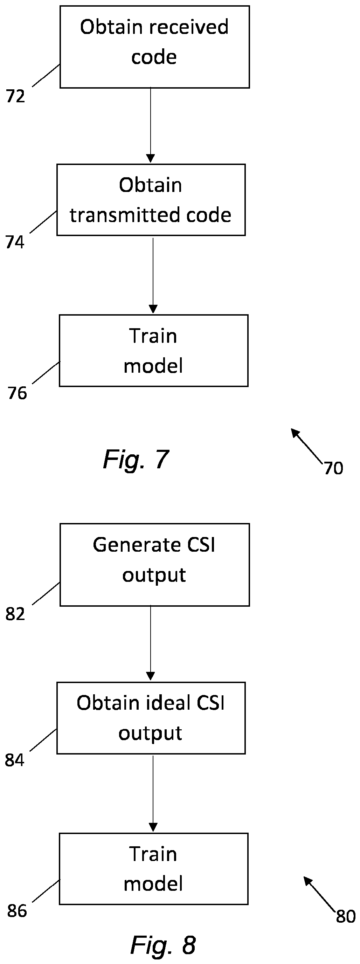

FIG. 7 is a flow chart showing an algorithm, indicated generally by the reference numeral 70, in accordance with an example embodiment. The algorithm 70 may be used to train the error detection module 47.

The algorithm 70 starts at operation 72, where a code relating to the channel estimate (e.g. the reconstructed code $\hat{C}$ output by the OFDM receiver 45) is received.

At operation 74 of the algorithm 70, a transmitted code (e.g. a more reliable version of the code C) is obtained. This code received in the operation represented labelled data that can be used for training.

At operation 76 of the algorithm 70, the error detection module 47 is trained by minimising a loss function based on the codes received in the operations 72 and 74.

Of course, the algorithm 70 is highly schematic and many modifications could be made. For example, the operations 72 and 74 could be reversed, or could be implemented in parallel.

FIG. 8 is a flow chart showing an algorithm, indicated generally by the reference numeral 80, in accordance with an example embodiment. The algorithm 80 may be used to train the error correction module 48.

The algorithm 80 starts at operation 82, where a channel state information estimate is generated (e.g. by an instance of the error correction module 48).

At operation 84 of the algorithm 80, labelled channel state information data is received. The labelled data is considered to be more accurate (or more reliable) than the data obtained in the operation 82.

At operation 86 of the algorithm 80, the error correction module 48 is trained by minimising a loss function based on the channel state information obtained in the operations 82 and 84.

Of course, the algorithm 80 is highly schematic and many modifications could be made. For example, the operations 82 and 84 could be reversed, or could be implemented in parallel.

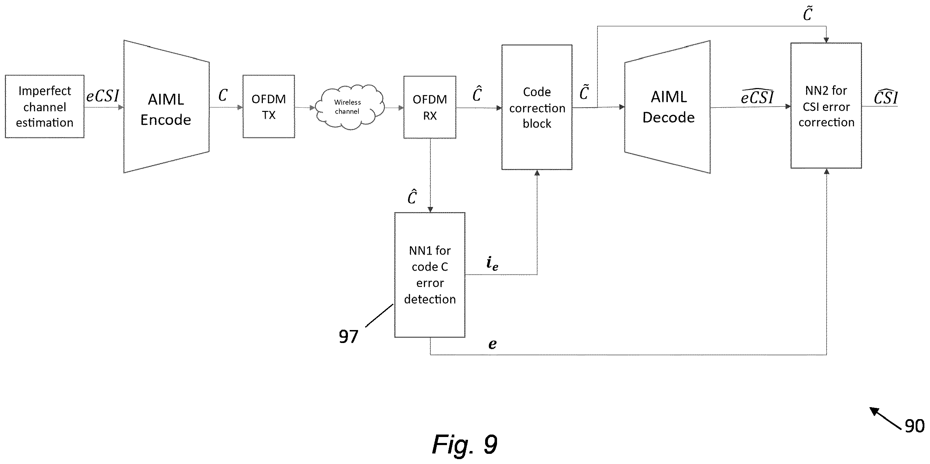

FIG. 9 is a block diagram showing a system, indicated generally by the reference numeral 90, in accordance with an example embodiment. The system 90 has many similarities with the system 40 described above.

In the system 90, two sets of outputs are provided by an error detection module 97 of the system 90. These outputs include:

- A scalar e ∈ [0,1] (as described above), where e = 1 if $\hat{C} = C$ (smaller values of e means there is higher probability that $\hat{C} \neq C$);
- A binary vector $i_e$, to determine which elements/segments of the code are affected due to the UL channel noise.

The information in e may help to find the index of element (for scalar quantization) or the index of segment (for vector quantization) in code $\widehat{C}$ which is affected due to the UL channel noise. In case an error has been detected in one of the segments/elements of the code $\widehat{C}$, a code correction block may be used to correct the channel code and results the corrected code $\tilde{C}$.

Thus, the error detection module 97 not only detects the errors in the reconstructed code but also outputs the index of segment/element that needs to be corrected.

Depending on the considered quantization type (scalar or vector quantization), we can determine the number of elements/segments in the code, which also defines the dimensionality of the binary vector $i_e$. An indication for possibility of training an error detection block 97 is that the codes generated by an encoder only occupy part of the code-space. This property has been seen and used in NW-first training scheme, where a single decoder de-compresses the codes from different UEs with different encoders.

The NN1 block implemented the error detection block 97 can be seen as multi-class classifier, where decisioning on the status of each element/segment is a separate class, resulting the number of classes is equal to the dimensionality of binary vector $i_e$. We can use a cross-entropy loss function to train the classifier. As an example, the j-th entry of the label can be obtained as

$$i_e^{(l)}(j) = \begin{cases} 1, & \widehat{C}(j) = C(j) \\ 0, & \widehat{C}(j) \neq C(j) \end{cases}$$

Different correction mechanisms/algorithms can be considered to correct the elements/segments affected by UL channel noise. As an example, the code correction block in the embodiments described above (such as the code correction block 48) may search over all or some the possible quantization levels/codewords for the affected segments. The search aims to find the quantization level/codeword that leads to a new code following the distribution of the codes in the training dataset.

Another possibility is to select the quantization level/codewords for the affected segment that leads to highest value of *e* if we feed the candidate codes to the trained error detection module.

In another example embodiment, the error correction module may be additionally fed with the channel correlation function which is either:

- Estimated by the gNB and/or predicted using any other UL data traffic.
- Estimated and reported by the UE e.g., the UE may report the maximum Doppler shift and the maximum delay spread and the gNB may use a model of choice to determine the channel correlation in time/frequency domains.

In another embodiment, the error correction module may be provided on the device side. For example, the error correction module could be provided between the channel estimation module 41 and the encoder module 42. In this scenario, the error correction module may receive as inputs: eCSI and optionally the channel correlation function and the estimated SINR.

To enable the various architectures described herein, coordination may be between the device side and the network side. For example, if the tasks of CSI correction and code error detection/correction are distributed between the device side and the network side, then the network side should coordinate the tasks e.g., by activating/deactivating the UE-based modules. Conversely, if the network decides to perform all said tasks itself, it may trigger the device to operate in an energy efficient mode (EEM) in which, for example:

- The device may use a simple downlink channel estimator e.g. least square (relying on the gNB doing the CSI correction).
- The device may defer the estimation and reporting of the channel correlation function and/or SINR conditions, etc.

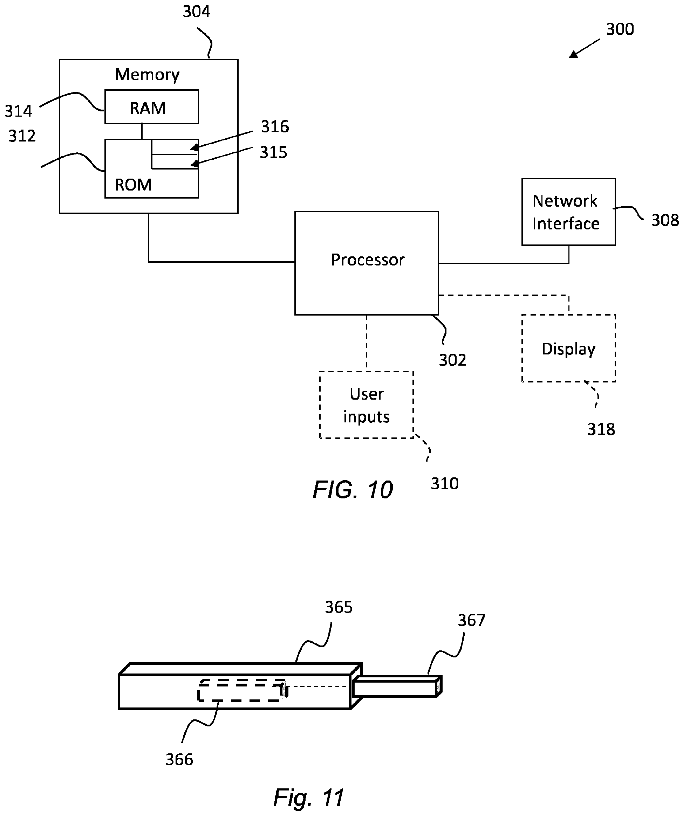

For completeness, FIG. 10 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 50, 60, 70 and 80 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 11 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 5 to 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising:

   means for receiving data transmitted by a device of a wireless communication system over a channel of said wireless communication system, wherein said data encodes a first estimate of a channel state information of the wireless channel as determined at said device;
   means for decoding said data to generate a second estimate of the channel state information of the wireless channel; and
   means for generating a channel state information output by modifying the second estimate of the channel state information based, at least in part, on a first error indication indicative of estimated errors in the first channel state information estimate as generated at the device.

2. An apparatus as claimed in claim 1, further comprising means for generating the first error indication.

3. An apparatus as claimed in claim 2, wherein the means for generating said first error indication comprises a first machine learning module.

4. An apparatus as claimed in claim 3, further comprising means for training said first machine learning module by minimising a loss function including labelled code data.

5. An apparatus as claimed in any one of the preceding claims, wherein the first error indication is a binary scalar.

6. An apparatus as claimed in any one of the preceding claims, wherein the means for generating said channel state information output comprises a second machine learning module.

7. An apparatus as claimed in claim 6, further comprising means for training said second machine learning module based on comparisons of generated channel state information with labelled channel state information data.

8. An apparatus as claimed in any one of the preceding claims, wherein said means for generating said channel state information output is configured to at least partially correct errors introduced in the data transmitted over the wireless connection between the device and the network node.

9. An apparatus as claimed in claim 8, further comprising means for detecting the errors introduced in the data transmitted over the wireless connection between the device and the network node.

10. An apparatus as claimed in any one of the preceding claims, wherein the device is a user device or user equipment of the mobile communication system.

11. An apparatus as claimed in any one of the preceding claims, wherein said means comprise at least one processor; and at least one memory storing instructions that, when executed by the at least one processor, cause the performance of the apparatus.

12. A method comprising:

receiving data transmitted by a device of a wireless communication system over a channel of said wireless communication system, wherein said data encodes a first estimate of a channel state information of the wireless channel as determined at said device;

decoding said data to generate a second estimate of the channel state information of the wireless channel; and

generating a channel state information output by modifying the second estimate of the channel state information based, at least in part, on a first error indication indicative of estimated errors in the first channel state information estimate as generated at the device.

13. A method as claimed in claim 12, further comprising generating the first error indication.

14. A method as claimed in claim 13, wherein generating said channel state information output includes at least partially correcting errors introduced in the data over the wireless connection between the device and the network node.

15. A computer program comprising instructions which, when executed by an apparatus, cause the apparatus to:

receiving data transmitted by a device of a wireless communication system over a channel of said wireless communication system, wherein said data encodes a first estimate of a channel state information of the wireless channel as determined at said device;

decoding said data to generate a second estimate of the channel state information of the wireless channel; and

generating a channel state information output by modifying the second estimate of the channel state information based, at least in part, on a first error indication indicative of estimated errors in the first channel state information estimate as generated at the device.

```
┌─────────┐         ┌─────────┐         ┌─────────┐
│ Device  │◄───────►│ Channel │◄───────►│ Network │
│         │         │         │         │  node   │
└─────────┘         └─────────┘         └─────────┘
   12                  14                  16
```

```
                                              10
```

*Fig. 1*

```
┌─────────┐         ┌─────────┐         ┌─────────────┐
│ Channel │────────►│ Encoder │────────►│ Transmitter │
│estimator│         │         │         │             │
└─────────┘         └─────────┘         └─────────────┘
   22                  24                  26
```

```
                                              20
```

*Fig. 2*

```
┌──────────┐         ┌─────────┐
│ Receiver │────────►│ Decoder │
│          │         │         │
└──────────┘         └─────────┘
   32                  34
```

```
                          30
```

*Fig. 3*

*Fig. 4*

Obtain channel estimate

52

Encode channel estimate

54

OFDM (or other) transmission

56

*Fig. 5*

50

OFDM (or other) reception

62

Detect/correct channel estimate

64

Process/use channel estimate

66

*Fig. 6*

60

```
         ┌─────────────────┐
         │  Obtain received │
         │      code        │
   72    └─────────────────┘
              │
              ▼
         ┌─────────────────┐
         │    Obtain        │
         │ transmitted code │
   74    └─────────────────┘
              │
              ▼
         ┌─────────────────┐
         │     Train        │
         │     model        │
   76    └─────────────────┘
```

**Fig. 7**            70

```
         ┌─────────────────┐
         │  Generate CSI    │
         │    output        │
   82    └─────────────────┘
              │
              ▼
         ┌─────────────────┐
         │  Obtain ideal CSI│
         │    output        │
   84    └─────────────────┘
              │
              ▼
         ┌─────────────────┐
         │     Train        │
         │     model        │
   86    └─────────────────┘
```

**Fig. 8**            80

Imperfect channel estimation

$eCSI$

AIML Encode

$C$

OFDM TX

Wireless channel

OFDM RX

$\hat{C}$

Code correction block

$\tilde{C}$

AIML Decode

$\widetilde{eCSI}$

NN2 for CSI error correction

$\widetilde{CSI}$

$\tilde{C}$

NN1 for code C error detection

$\hat{C}$

$i_e$

$e$

97

90

*Fig. 9*

FIG. 10

Fig. 11

**EP 4 510 479 A1**

Europäisches
Patentamt

European
Patent Office

Office européen
des brevets

# EUROPEAN SEARCH REPORT

Application Number

EP 24 18 9795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO JIAJIA ET AL: "Environment Knowledge-Aided Massive MIMO Feedback Codebook Enhancement Using Artificial Intelligence", IEEE TRANSACTIONS ON COMMUNICATIONS, IEEE SERVICE CENTER, PISCATAWAY, NJ. USA, vol. 70, no. 7, 3 June 2022 (2022-06-03), pages 4527-4542, XP011914496, ISSN: 0090-6778, DOI: 10.1109/TCOMM.2022.3180388 [retrieved on 2022-06-06] * the whole document * | 1-15 | INV. H04L1/00 H04B7/06 ADD. G06N3/08 H04L25/02 |
| X | US 2009/265601 A1 (MIELCZAREK BARTOSZ [CA] ET AL) 22 October 2009 (2009-10-22) * paragraph [0017] - paragraph [0040] * * paragraph [0112] - paragraph [0130] * * figures 1,2,7 * | 1,2,5, 8-15 | |
| X,P | WO 2024/150208 A1 (LENOVO SINGAPORE PTE LTD [SG]) 18 July 2024 (2024-07-18) * paragraph [0052] - paragraph [0056] * * paragraph [0085] - paragraph [0145] * * paragraph [0153] - paragraph [0159] * * figures 1-6 * | 1,2,5, 8-15 | TECHNICAL FIELDS SEARCHED (IPC) H04L H04B G06N |
| A | CHANG HAORAN ET AL: "Deep Learning-Based Bitstream Error Correction for CSI Feedback", IEEE WIRELESS COMMUNICATIONS LETTERS, IEEE, PISCATAWAY, NJ, USA, vol. 10, no. 12, 8 October 2021 (2021-10-08), pages 2828-2832, XP011891749, ISSN: 2162-2337, DOI: 10.1109/LWC.2021.3118923 [retrieved on 2021-12-07] * the whole document * | 1-15 | |

The present search report has been drawn up for all claims

| Place of search | Date of completion of the search | Examiner |
|---|---|---|
| Munich | 13 December 2024 | Gardella, Simone |

EPO FORM 1503 03.82 (P04C01)

## ANNEX TO THE EUROPEAN SEARCH REPORT
## ON EUROPEAN PATENT APPLICATION NO.

EP 24 18 9795

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| US 2009265601 A1 | 22-10-2009 | CN | 102439865 A | 02-05-2012 |
| | | CN | 106850022 A | 13-06-2017 |
| | | EP | 2269323 A1 | 05-01-2011 |
| | | US | 2009265601 A1 | 22-10-2009 |
| | | US | 2012275534 A1 | 01-11-2012 |
| | | US | 2014241453 A1 | 28-08-2014 |
| | | US | 2016248488 A1 | 25-08-2016 |
| | | US | 2019363762 A1 | 28-11-2019 |
| | | US | 2023155637 A1 | 18-05-2023 |
| | | US | 2024187044 A1 | 06-06-2024 |
| | | WO | 2009129603 A1 | 29-10-2009 |
| WO 2024150208 A1 | 18-07-2024 | NONE | | |

EPO FORM P0459

For more details about this annex : see Official Journal of the European Patent Office, No. 12/82